## Europäisches Patentamt
## European Patent Office
## Office européen des brevets

(19)

(11) Publication number: **0 067 482**
**B1**

(12)

# EUROPEAN PATENT SPECIFICATION

(45) Date of publication of patent specification: **28.10.87**

(51) Int. Cl.⁴: **A 22 B 3/06**

(21) Application number: **82200703.5**

(22) Date of filing: **08.06.82**

(54) **Apparatus for the automatic stunning of slaughter cattle.**

(30) Priority: **12.06.81 BE 205083**

(43) Date of publication of application:
**22.12.82 Bulletin 82/51**

(45) Publication of the grant of the patent:
**28.10.87 Bulletin 87/44**

(84) Designated Contracting States:
**AT CH DE FR GB IT LI LU NL SE**

(56) References cited:
**EP-A-0 021 548**
**DE-C- 494 062**
**DE-C- 548 047**

(73) Proprietor: **MACHINEFABRIEK G.J. NIJHUIS B.V.**
**Parallelweg 4 Postbus 102**
**NL-7100 AC Winterswijk (NL)**

(72) Inventor: **Goossens, Jan Baptist Robert**
**Balei 56**
**B-9520 St. Lievens-Houtem (BE)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

EP 0 067 482 B1

## Description

Apparatus for the automatic stunning of slaughter cattle.

The invention relates to an apparatus for the automatic electric stunning of slaughter cattle, in particular pigs, comprising two endless conveyors having their operative surfaces arranged with respect to each other such that a V-shaped passage is formed and running in synchronism and parallel to each other and further comprising two electrodes insulated with respect to each other and extending into the V-shaped passage from above in a position next to each other, said electrodes being swingable about a horizontal transverse axis mounted above the conveyors.

An apparatus of this type is known from EP—A—21 548.

According to said prior proposal the electrodes are swingably mounted upon horizontal transverse axis in a carriage which can be moved in the longitudinal direction of the conveyors, which electrodes are held in a starting position by means of springs which electrodes can be swung upwardly by the stunned animal. Said springs are combined with dampers to ensure proper contact between the electrodes and the head of the animal and the abutments hold the electrodes in an inclined starting position. The carriage starts its movement as soon as a sensing current between the electrodes establishes the presence of the correct animal so that during the passage of the stunning current relative movements between electrodes and animal's head are avoided.

This known apparatus has an excellent performance and is able to stun a great number of animals per hour without any insufficient stunning or damage of the meat by internal bleeding and the like.

This known apparatus, however, is rather complicated and expensive to manufacture.

Purpose of the invention is to provide an apparatus which can be manufactured in a very simple way.

According to the invention this purpose is achieved in that the electrodes are free swingably suspended from the said transverse axis in the manner of a pendulum which pendulum is urged towards its vertical starting position by its own gravity and that the pendulum has a length of at least two meters calculated from the center of the electrodes towards the axis at the top of the pendulum.

Accordingly in the apparatus according to the invention the animal upon coming into contact with the electrodes, will move the electrodes against the force which is derived from the weight of the entire pendulum which weight tries to keep the pendulum in its lowermost position in which at rest the pendulum extends vertical.

Due to the length of at least two meters it is achieved that when the pendulum is moved by the animal to be stunned the position of the electrodes during the any how short stunning time hardly charges its position with respect to the animal's head so that proper stunning can take place during the any how short time that the electrodes are in contact with the animal's head.

Preferably the two electrodes together are positioned at an angle with respect to each other as to form a V pointing in the direction of movement.

It is observed that from DE—C—494 062 an apparatus for stunning slaughter cattle is known in which the conveyor is formed by an endless belt upon which the animals are standing. At the sides of said endless belt fences are provided between which electrodes are suspended from horizontal transverse axis one behind the other, which electrodes are connected with springs. If said electrodes are swung upwardly by an animal they are held in proper contact with the animal's head and body by spring pressure and after the animal having passed the electrodes the springs swing the electrodes back towards the initial vertical position. Said electrodes of course have a weight and the returning action and contact pressure action of the springs on the electrodes is supported by the gravity component of the electrodes. The electrodes are short so that the springs are necessary to obtain sufficient contact with the animal to be stunned.

In the apparatus according to the invention the pendulum between the electrode surfaces and the transverse axis provides for sufficient weight to obtain proper contact and for returning the electrodes towards the vertical initial position without the need of springs. Moreover the relative movement of the electrodes with respect to the animal's head during the stunning time is reduced with increasing length of the pendulum and without the need of a carriage as proposed in EP—A—21 548 for avoiding said relative movement.

Preferably said pendulum cooperates with an end switch interrupting the current supply to the electrodes before said electrodes leave the outer end of the V-shaped passage. This is necessary to avoid that there exists tension between the electrodes as soon as they start to move over the body of the stunned animal as well as to avoid contact with personnel outside the restrainer formed by the conveyors.

Preferably the electrodes in the vertical starting position of the pendulum are present in a transverse plane lying closely in front of the transverse plane through the axes of the reversing wheels of the conveyors with the lower edges of the conveyors at the outer end above a receiving surface with a distance of at least 65 cm.

The position of the electrodes close to the exit end of the conveyor with the receiving surface at such a lower level that the stunned animal falls down sufficiently to free the V-shaped passage, ensures that the electrodes with a minimal swinging angle permit that the electrodes can return readily into the vertical starting position to meet the next animal. Further undesired contact of the electrodes with the other parts of the animal is avoided.

The invention now will be further elucidated with reference to the drawings.

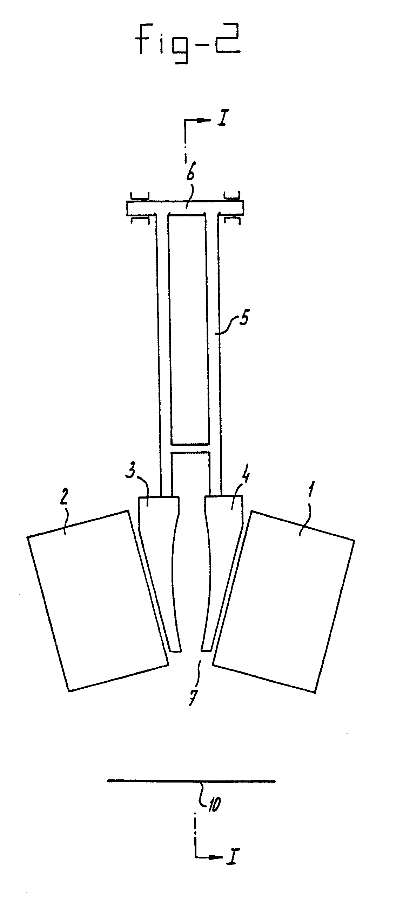

Fig. 1 is a side-view partly cross-section according to the line I—I of Fig. 2 of the apparatus according to the invention.

Fig. 2 is a front view of the apparatus of Fig. 1.

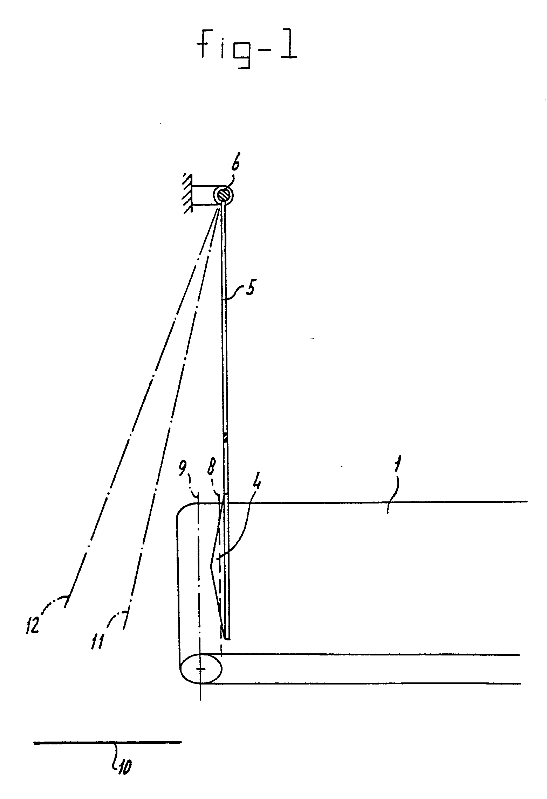

The apparatus shown in the drawings has two endless conveyors 1 and 2 one of which only being shown in Fig. 1. Said two conveyors form a so-called restrainer holding the animal to be stunned at its belly.

The two electrodes are indicated with 3 and 4 and they are rigidly attached to a frame 5 forming a pendulum which is free swingably suspended from a transverse axis 6 located at a high level above the conveyors 1 and 2. This frame 5 has a length of two meters or more.

As shown in Fig. 1 the electrodes in their vertical starting position can lie in a plane 8 which is close to the plane 9 through the axes of the reversing wheels of the two conveyors 1 and 2. An animal stunned will move the electrodes to the left and after the stunning the animal will fall out of the exit of the conveyors and upon the receiving surface 10. The V-shaped passage 7 in this way is immediately free from the stunned animal and the pendulum 5 with electrodes 3 and 4 can return immediately into the position shown in Fig. 1 without unnecessary contact with the animal and in time to stun the next animal.

The pendulum 5 may cooperate with a switch not shown but operated when the pendulum passes the position indicated with the interrupted line 11. This switch can be made such that upon return of the pendulum from the position shown with line 12 towards the in full lines shown starting position the electrodes are put under electric tension again.

The apparatus according to the invention is of a very simple construction.

## Claims

1. Apparatus for the automatic electric stunning of slaughter cattle, in particular pigs, comprising two endless conveyors (1, 2) having their operative surfaces arranged with respect to each other such that a V-shaped passage (7) is formed and running in synchronism and parallel to each other and further comprising two electrodes (3, 4) insulated with respect to each other and extending into the V-shaped passage (7) from above in a position next to each other, said electrodes (3, 4) being swingable about a horizontal transverse axis (6) mounted above the conveyors (1, 2) characterized in that the electrodes (3, 4) are free swingably suspended from the said transverse axis (6) in the manner of a pendulum (5) which pendulum is urged towards its vertical starting position by its own gravity and that the pendulum (5) has a length of at least two meters calculated from the center of the electrodes (3, 4) towards the said transverse axis (6).

2. Apparatus as claimed in claim 1, characterized in that the pendulum cooperates with an end switch which interrupts the current supply to the electrodes (3, 4) prior to the electrodes leaving the outer end of the V-shaped passage (7).

3. Apparatus as claimed in claim 1 or 2, characterized in that the electrodes in the vertical starting position of the pendulum (5) are in a transverse plane (8) which is located closely in front of the transverse plane (9) through the axes of the reversing wheels (1, 2) of the conveyors at the outlet end of the conveyors, the lower edge of said conveyors at said outer end lying above a receiving surface (10) with a distance of at least 65 cm.

## Patentansprüche

1. Vorrichtung zur automatischen elektrischen Betäubung von Schlachtvieh, insbesondere von Schweinen, umfassend zwei endlose Förderbänder (1, 2), deren Wirkflächen zueinander derart angeordnet sind, dass ein V-förmiger Durchgang (7) gebildet wird, und die parallel zueinander synchron laufen, und ferner umfassend zwei Elektroden (3, 4), die gegeneinander isoliert sind und in Nähe voneinander in den V-förmigen Durchgang (7) von oben her hineinragen, wobei diese Elektroden (3, 4) um eine über den Förderbändern (1, 2) angeordnete horizontale Querachse (6) schwenkbar sind, dadurch gekennzeichnet, dass die Elektroden (3, 4) nach Art eines Pendels (5) an dieser Querachse (6) frei schwenkbar aufgehängt sind, wobei dieser Pendel (5) durch das eigene Gewicht zu seiner vertikalen Ausgangslage hin strebt, und dass der Pendel (5) eine vom Zentrum der Elektroden (3, 4) zur Querachse (6) hin berechnete Länge von mindestens zwei Metern aufweist.

2. Vorrichtung nach Anspruch 1, dadurch gekennzeichnet, dass der Pendel mit einem Endschalter zusammenwirkt, der die Stromzufuhr zu den Elektroden (3, 4) unterbricht, bevor die Elektroden das äussere Ende des V-förmigen Durchgangs (7) verlassen.

3. Vorrichtung nach Anspruch 1 oder 2, dadurch gekennzeichnet, dass in der vertikalen Ausgangslage des Pendels (5) die Elektroden sich in einer querliegenden Ebene (8) befinden, die nahe vor der querliegenden Ebene (9) gelegen ist, in welcher die Umlenkrollen der Förderbänder (1, 2) am Entladeende der Förderbänder liegen, wobei der untere Rand dieser Förderbänder an diesem äusseren Ende über einer Auffangfläche (10) im Abstand von mindestens 65 cm davon liegt.

## Revendications

1. Dispositif pour l'assommage électrique automatique de bétail de boucherie, en particulier de porcs, comportant deux convoyeurs à bande sans fin (1, 2) dont les surfaces efficaces sont disposées l'une par rapport à l'autre de telle façon qu'il se forme un passage en forme de V (7) et qui courent en synchronisme et parallèlement l'un à l'autre, et comprenant en outre deux électrodes (3, 4) isolées l'une par rapport à l'autre et qui pénètrent l'une près de l'autre depuis le haut à l'intérieur du passage en forme de V (7), ces électrodes (3, 4) étant susceptibles de basculer autour d'un axe horizontal transversal (6) monté au-dessus des convoyeurs (1, 2), caractérisé en ce que les électrodes (3, 4) sont suspendues à basculement libre à cet axe transversal (6) à la manière d'un pendule (5), ce pendule étant rappelé vers sa position verticale initiale par son propre poids, et que le pendule (5) présente une longueur d'au moins deux mètres comptée depuis le centre des électrodes (3, 4) vers l'axe transversal (6).

2. Dispositif selon la revendication 1, caractérisé en ce que le pendule coopère avec un interrupteur de fin de course qui interrompt l'amenée de courant aux électrodes (3, 4) avant que les électrodes ne quittient l'extrémité extérieure du passage en forme de V (7).

3. Dispositif selon la revendication 1 ou 2, caractérisé en ce que dans la position verticale initiale du pendule (5) les électrodes sont situées dans un plan transversal (8) qui est situé à proximité et devant le plan transversal (9) qui contient les axes des roues de renvoi (1, 2) des convoyeurs à l'extrémité de décharge des convoyeurs, le bord inférieur de ces convoyeurs étant en cette extrémité de décharge situé au-dessus d'une surface de réception (10) à une distance d'au-moins 65 cm de celle-ci.

fig-1

Fig-2